(19) Europäisches Patentamt

European Patent Office

Office européen des brevets

(11) **EP 1 594 335 A2**

(12) **EUROPEAN PATENT APPLICATION**

(43) Date of publication:
**09.11.2005 Bulletin 2005/45**

(51) Int Cl.$^7$: **H04Q 7/38**

(21) Application number: **05009839.1**

(22) Date of filing: **04.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **04.05.2004 KR 2004031553**<br>     **06.08.2004 KR 2004062162**<br><br>(71) Applicant: **Samsung Electronics Co.,Ltd.**<br>**Yeongtong-gu Suwon-si, Gyeonggi-do (KR)**<br><br>(72) Inventors:<br>  • **Kwak, Yong-Jun Samsung Electronics Co., Ltd.**<br>**Suwon-si Gyeonggi-do (KR)**<br>  • **Choi, Sung-Ho Samsung Electronics Co., Ltd.**<br>**Suwon-si Gyeonggi-do (KR)** | • **Lee, Ju-Ho Samsung Electronics Co., Ltd.**<br>**Suwon-si Gyeonggi-do (KR)**<br>• **Cho, Joon-Young Samsung Electronics Co., Ltd.**<br>**Suwon-si Gyeonggi-do (KR)**<br>• **Heo, Youn-Hyoung**<br>**Samsung Electronics Co., Ltd.**<br>**Suwon-si Gyeonggi-do (KR)**<br>• **Kim, Young-Bum Samsung Electronics Co., Ltd.**<br>**Suwon-si Gyeonggi-do (KR)**<br>• **The other inventors have agreed to waive their entitlement to designation.**<br><br>(74) Representative: **Grünecker, Kinkeldey, Stockmair & Schwanhäusser Anwaltssozietät**<br>**Maximilianstrasse 58**<br>**80538 München (DE)** |

(54) **Cell selection for uplink packet transmission from a user equipment during soft handover**

(57)    A method and apparatus for selecting a serving scheduling Node B for efficiently controlling and scheduling uplink traffic transmission from user equipments (UEs) located in a soft handover region. The UE selects a serving scheduling cell among cells included in its active set and transmits information on the selected serving scheduling cell to a Node B through uplink signaling. A service scheduling cell and non-serving scheduling cells efficiently control uplink traffic from the UE through independent scheduling. The efficient use of uplink resources contributes to an increase in the entire system performance and system stability.

FIG.9

EP 1 594 335 A2

**Description**

**BACKGROUND OF THE INVENTION**

Field of the Invention:

The present invention relates generally to Wideband Code Division Multiple Access (WCDMA) communication. More particularly, the present invention relates to a method and apparatus for efficiently scheduling an enhanced uplink dedicated channel when user equipments located in a soft handover region service the enhanced uplink dedicated channel for uplink packet transmission.

Description of the Related Art:

An Universal Mobile Telecommunications Service (UMTS) system which is a 3$^{rd}$ generation mobile communication system that is based on Global System for Mobile Communications system (GSM) which is European mobile communication system and uses Wideband Code Division Multiple Access (WCDMA), provides a consistent service capable of transmitting packet-based text, digitalized voice or video, and multimedia data at a high rate of 2 Mbps or higher no matter where mobile phone users or computer users are located all over the world. UMTS uses the concept of virtual access called "packet-switched access" that uses a packet protocol like Internet Protocol (IP), and can always access any terminal in the network.

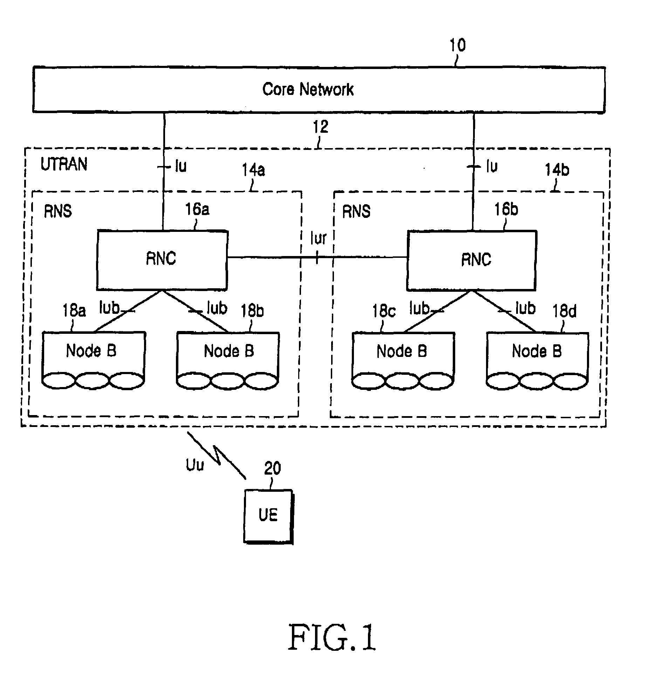

FIG. 1 is a diagram illustrating a configuration of a conventional UMTS Terrestrial Radio Access Network (UTRAN). Referring to FIG. 1, a UTRAN 12 includes radio network controllers (RNCs) 16a and 16b, and Node Bs 18a, 18b, 18c and 18d, and connects a terminal or user equipment (UE) 20 to a core network 10. Each of the Node Bs 18a, 18b, 18c and 18d can have a plurality of cells in its lower layer. The RNCs 16a and 16b each control their associated Node Bs in their lower layers. For example, in FIG. 1, the RNC 16a controls the Node Bs 18a and 18b, and the RNC 16b controls the Node Bs 18c and 18d. The Node Bs 18a, 18b, 18c and 18d each control their associated cells. One RNC and its associated Node Bs and cells controlled by the RNC constitute a radio network subsystem (RNS) 14a and 14b.

An RNC assigns or manages radio resources of its Node Bs, and the Node B actually provides the radio resources. The radio resources provided by the Node B means radio resources of cells managed by the Node B itself. A UE can create a radio channel using a radio resource provided by a particular cell of a particular Node B, and perform communication using the created channel. Because distinguishing between a Node B and a cell is meaningless to a UE and the UE recognizes only a physical layer comprised of cells, the terms "Node B" and "cell" will be used herein as the same meaning.

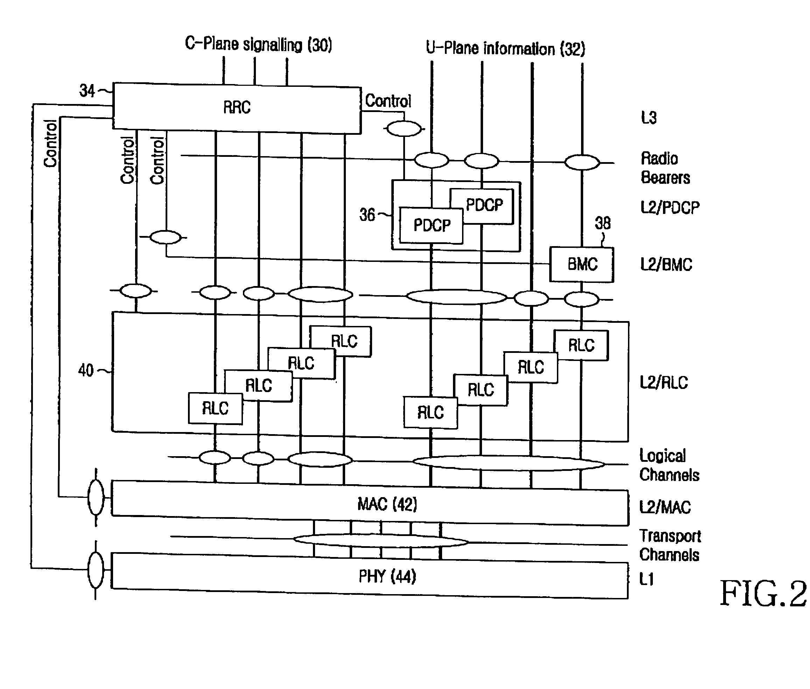

An interface between a UE and a Node B is called a Uu interface, and its detailed hierarchical structure is illustrated in FIG. 2. The Uu interface is divided into a control plane used for exchanging control signals between the UE and the Node B and a user plane used for transmitting actual data.

Referring to FIG 2, control-plane (C-plane) signaling 30 is processed through a radio resource control (RRC) layer 34, a radio link control (RLC) layer 40, a media access control (MAC) layer 42, and a physical (PHY) layer 44, and user-plane (U-plane) information 32 is processed through a packet data control protocol (PDCP) layer 36, a broadcast/multicast control (BMC) layer 38, the RLC layer 40, the MAC layer 42 and the PHY layer 44. Among the layers illustrated herein, the PHY layer 44 is located in each cell and the MAC layer 42 to the RRC layer 34 are located in an RNC.

The PHY layer 44 provides an information transfer service using a radio transfer technique, and corresponds to Layer 1 of the Opening Systems Interconnection (OSI) model. Connection between the PHY layer 44 and the MAC layer 42 is achieved by transport channels, and the transport channels are defined according to how specific data is processed in the PHY layer 44.

The MAC layer 42 is connected to the RLC layer 40 through logical channels. The MAC layer 42 delivers data received through a logical channel from the RLC layer 40 to the PHY layer 44 through a proper transport channel, and delivers data received through a transport channel from the PHY layer 44 to the RLC layer 40 through a proper logical channel. In addition, the MAC layer 42 inserts additional information into data received through a logical channel or a transport channel, or analyzes additional information inserted into data and performs an appropriate operation according to the analyzed additional information. Further, the MAC layer 42 controls a random access operation. In the MAC layer 42, a part related to the user plane 32 is called MAC-d, and a part related to the control plane 30 is called MAC-c.

The RLC layer 40 manages setup and release of a logical channel. The RLC layer 40 can operate in one of three operation modes of an acknowledged mode (AM), an unacknowledged mode (UM) and a transparent mode (TM), and each operation mode provides a different function. Generally, the RLC layer 40 performs the function of disassembling or assembling a service data unit (SDU) provided from an upper layer in an appropriate size, and an error correction function.

The PDCP layer 36 is located in an upper layer of the RLC layer 40 in the user plane 32, and has a function of compressing and decompressing a header of data transmitted in the form of an IP packet and a function of lossless-transmitting data in a situation where an RNC providing a mobile service to a particular UE is changed.

A characteristic of the transport channels connecting the PHY layer 44 to its upper layers is determined by a transport format (TF) that defines physical layer processing that performs processes such as convolutional channel encoding, interleaving and service-specific rate matching.

Particularly, a UMTS system uses an enhanced uplink dedicated channel (EUDCH or E-DCH) so as to enhance packet transmission performance in uplink communication from a UE to a Node B. In order to support stabilized high-speed data transmission, the E-DCH supports such techniques as Adaptive Modulation and Coding (AMC), Hybrid Automatic Retransmission Request (HARQ) and Node B-controlled scheduling. Processing of the E-DCH is achieved by a MAC-e layer located in a lower layer of a MAC-d layer, and E-DCH data output in the MAC-e layer is called a MAC-enhanced Protocol Data Unit (MAC-e PDU).

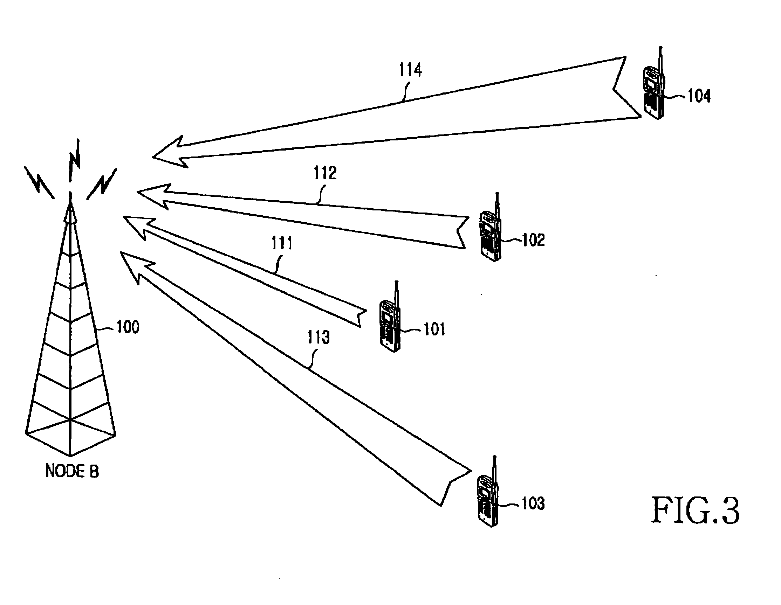

FIG. 3 is a concept diagram illustrating a conventional method of transmitting uplink packet data over an E-DCH in a radio link. Referring to FIG. 3, reference numeral 100 represents a Node B supporting the E-DCH, and reference numerals 101, 102, 103 and 104 represent UEs transmitting the E-DCH. The Node B 100 analyzes conditions of the UEs 101 through 104 that use the E-DCH, and schedules a data rate of each UE according to the analysis result. In order to increase the entire system performance, the scheduling is performed in such a manner that a UE located farther from a Node B is assigned a lower data rate and a UE located nearer from the Node B is assigned a higher data rate as long as a measured Rise-over-Thermal (RoT) value of the Node B does not exceed a target RoT value.

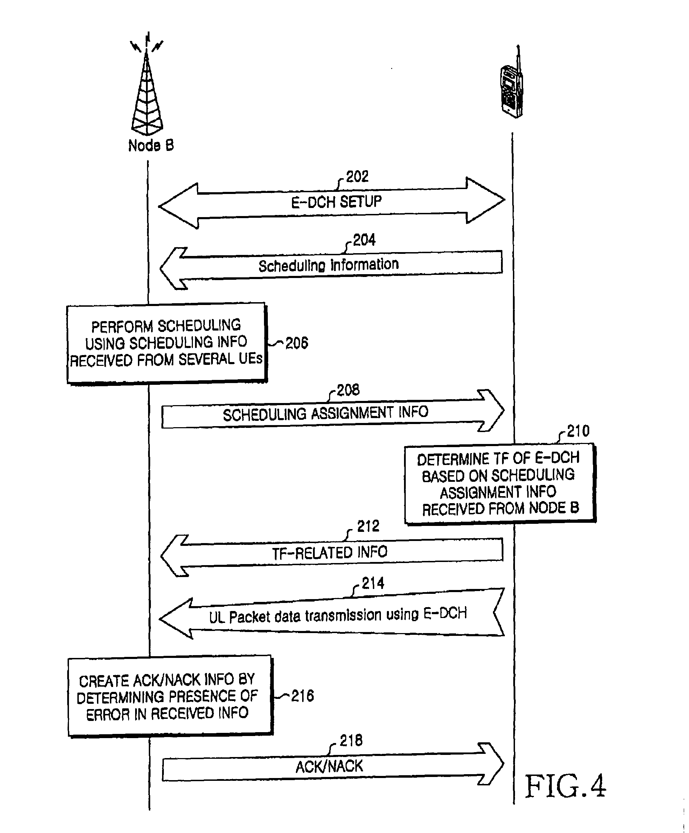

FIG. 4 is a signaling diagram illustrating a conventional procedure for transmitting and receiving messages over an E-DCH. Referring to FIG. 4, in step 202, a Node B and a UE set up an E-DCH therebetween. The E-DCH setup process 202 includes a process of transmitting messages through a dedicated transport channel. After the E-DCH setup, the UE provides scheduling information to the Node B in step 204. The scheduling information can include UE's transmission power information representing uplink channel information, information on available extra power of the UE, and the amount of transmission data piled in a UE's buffer.

In step 206, the Node B, which receives scheduling information from a plurality of UEs in communication with the Node B, monitors the scheduling information received from the plurality of UEs in order to schedule a data rate of each UE. Specifically, in step 208, the Node B determines to grant the UE to transmit an uplink packet and transmits scheduling assignment information to the UE. The scheduling assignment information includes a granted data rate and granted transmission timing.

In step 210, the UE determines a transport format (TF) of the E-DCH to be transmitted in a reverse direction, using the scheduling assignment information. The UE transmits uplink (UL) packet data over the E-DCH in step 212, and at the same time, transmits the TF information to the Node B in step 214. In step 216, the Node B determines whether there is an error in the TF information and the packet data. In step 218, the Node B transmits a non-acknowledge (NACK) to the UE over an ACK/NACK channel if there is an error in any of them. However, if there is no error in both of them, the Node B transmits an acknowledge (ACK) to the UE through the ACK/NAKC channel.

If the ACK is transmitted, transmission of the corresponding packet data is completed and thus, the UE transmits new data through the E-DCH. However, if the NACK is transmitted, the UE retransmits the same packet data over the E-DCH.

The foregoing scheduling method for uplink packet transmission can be divided into several methods. The typical scheduling methods include a rate scheduling method and a time-and-rate scheduling method. In the rate scheduling method, a Node B controls a data rate of each UE step by step. In the time-and-rate scheduling method, the Node B simultaneously controls a time and a rate for uplink packet transmission of a UE.

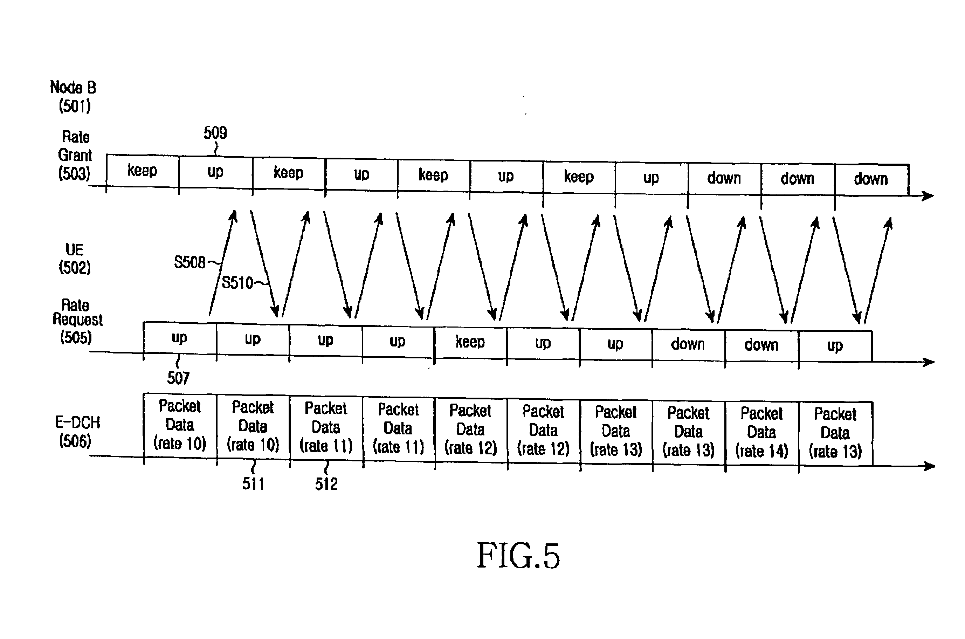

FIG. 5 is a diagram illustrating a conventional rate scheduling method performed between a UE and a Node B. A UE 502 is transmitting rate request information 505 and E-DCH data 506, and a Node B 501 is transmitting rate grant information 503 representing information on a rate that is assigned to the UE 502 through scheduling.

That is, the UE 502 determines the amount of uplink transmission data in its buffer and its available extra power, and transmits a rate-up/down request through the rate request information 505 according to the determination result in order to set a next desired rate. The Node B 501 receiving the rate request information 505 synthesizes the rate request information transmitted from the UE 502 and other UEs controlled by the Node B 501, determines whether to increase, decrease or keep a rate of the UE 502 according to the synthesis result, and informs the UE 502 of the determination result using the rate grant information 503.

Referring to a specific example of FIG. 5, in step S508, the UE 502 transmits a rate-up request using rate request information 507 to increase its rate. The Node B 501 receiving the rate request information 507 transmits rate-up information to the UE 502 using rate grant information 509 through scheduling in step S510. The UE 502 receiving a rate-up grant by the rate grant information. 509 can transmit an uplink packet at a rate 11 (512), which is increased by one step compared with a previous rate 10 (511).

In the foregoing rate scheduling, the rate information can be expressed with multi-level rates in the same table previously stored in the Node B and the UE. In another case, the rate information can be expressed with a transport block combination (TBC) representing a transport block size (TBS).

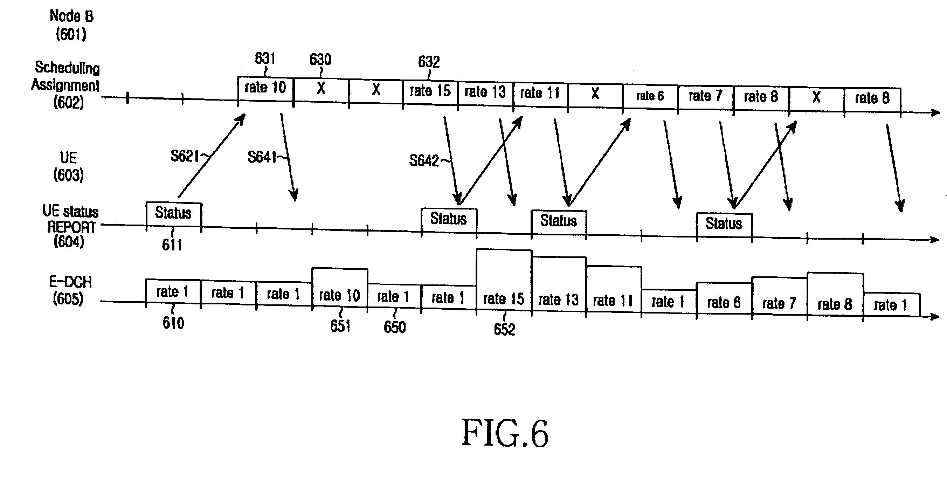

FIG. 6 is a diagram illustrating a conventional time-and-rate scheduling method of transmitting uplink and downlink control information and transmitting, by a UE, an uplink packet according to the control information.

Referring to FIG. 6, a UE 603 transmits UE status information 604 to a Node B 601 periodically, on an event-triggered basis, or on a periodical transmission-based event-triggered basis. The Node B 601 receiving the UE status information 604 selects the UE 603 as a UE to be transmission-granted for the next frame duration, determines a granted rate for the selected UE 603, and transmits the determined granted rate to the UE 603 using scheduling assignment information 602. Then the UE 603 transmits E-DCH data in the reverse direction for a predetermined time using the rate indicated by the scheduling assignment information 602.

For example, the UE 603 first uses a rate 1 (610) for transmission of E-DCH data 605. In step S621, if the UE 603 transmits UE status information 611 to the Node B 601, the Node B 601 performs scheduling to determine whether to grant E-DCH transmission for the UE 603 for the next frame duration. If the Node B 601 determines to grant E-DCH transmission, it determines a rate to be granted for the UE 603 and also determines information on a time for which the transmission is granted. In step S641, the Node B 601 transmits the assigned (granted) timing information and the assigned (granted) rate information to the UE 603 using scheduling assignment information 631. The UE 603 transmits E-DCH data according to an assigned rate 10 (651) for a time based on the scheduling assignment information 631. Because the scheduling information 631 includes information granting transmission at a rate 10, the UE 603 transmits E-DCH data 605 at the rate 10 (651). However, if the Node B 601 sets no scheduling assignment information for the UE 603 as shown by reference numeral 630, the UE 603 transmits E-DCH data 605 using a rate 1 650, which is the minimum rate. Thereafter, in step 642, if the Node B 601 transmits scheduling assignment information 632 representing a rate 15, the UE 603 can transmit E-DCH data 605 at a rate 15 (652) according to the scheduling assignment information 632.

Hitherto, a description has been made of the conventional scheduling methods. Because the E-DCH is a channel enhanced for packet transmission of an uplink transport channel, it follows the basic characteristics of a dedicated channel. One of them is to support soft handover, and in this case, a UE located in a soft handover region can receive downlink information from all Node Bs belonging to its active set. Therefore, the UE located in the soft handover region receives scheduling assignment information from all the Node Bs belonging to its active set in order to transmit the E-DCH.

In this case, in scheduling the UE located in the soft handover region, all of the Node Bs belonging to the active set of the UE transmit their own scheduling assignment information to the UE, generating a signaling overhead, and the UE receiving the signaling assignment information from all the Node Bs may have difficulty in determining a TF for transmission of the E-DCH.

## SUMMARY OF THE INVENTION

Therefore, to solve the foregoing problem, the present invention provides a method and apparatus for scheduling an enhanced uplink dedicated channel (E-DCH) for user equipments (UEs) located in a soft handover region in a Wideband Code Division Multiple Access (WCDMA) communication system.

In addition, the present invention provides a method and apparatus for selecting a serving (or optimal) scheduling Node B for a UE located in a soft handover region.

Finally, the present invention provides a signaling method and apparatus in which a UE located in a soft handover region performs signaling such that information on a selected serving scheduling Node B can be shared between a Node B and the UE.

According to one aspect of the present invention, there is provided a method for transmitting uplink packet data by a user equipment (UE) that communicates with a plurality of cells due to soft handover in a mobile communication system supporting an enhanced uplink packet data service, the method comprises the steps of selecting a serving scheduling cell for scheduling the uplink packet data service for the UE according to at least one of downlink path loss information, uplink load condition information and acknowledge (ACK) ratio information, notifying information indicating the selected serving scheduling cell to the plurality of cells; receiving rate grant information for transmission of uplink packet data, from the selected serving scheduling cell and unselected non-serving scheduling cells among the plurality of cells, and transmitting the uplink packet data to the plurality of cells according to the rate grant information.

According to another aspect of the present invention, there is provided a user equipment (UE) apparatus for transmitting uplink packet data while communicating with a plurality of cells due to soft handover in a mobile communication system supporting an enhanced uplink packet data service, the apparatus comprising a serving scheduling cell selector for selecting a serving scheduling cell for scheduling the uplink packet data service for the UE according to at least one of downlink path loss information, uplink load condition information and acknowledge (ACK) ratio information, a control information transmitter for transmitting identification information representing the selected serving scheduling cell to the plurality of cells, and a data transmitter for receiving rate grant information for transmission of uplink packet data, from the selected serving scheduling cell and unselected non-serving scheduling cells among the plurality of cells, and transmitting the uplink packet data to the plurality of cells according to the rate grant information.

According to further another aspect of the present invention, there is provided a method for receiving uplink packet data from a user equipment (UE) by a Node B in communication with the UE that is performing soft handover, in a mobile communication system supporting an enhanced uplink packet data service, the method comprising the steps of receiving, from the UE, information representing a selected serving scheduling cell from among a plurality of cells with which the UE communicates, wherein the serving scheduling cell is selected by the UE according to at least one of downlink path loss information, uplink load condition information and acknowledge (ACK) ratio information, transmitting rate grant information representing a rate assigned for transmission of uplink packet data to the UE through the selected serving scheduling cell or unselected non-serving scheduling cells according to the serving scheduling cell information, and receiving the uplink packet data from the UE according the rate grant information.

**BRIEF DESCRIPTION OF THE DRAWINGS**

The above and other objects, features and advantages of the present invention will become more apparent from the following detailed description when taken in conjunction with the accompanying drawings in which:

FIG 1 is a diagram illustrating a conventional configuration of a UMTS Terrestrial Radio Access Network (UTRAN);
FIG. 2 is a conventional hierarchical structure representing an interface between a UE and a Node B;
FIG. 3 is a concept diagram illustrating a conventional method of transmitting uplink packet data over an E-DCH in a conventional radio link;
FIG. 4 is a signaling diagram illustrating a conventional procedure for transmitting and receiving messages over an E-DCH;
FIG 5 is a diagram illustrating a conventional rate scheduling method performed between a UE and a Node B;
FIG. 6 is a diagram illustrating a conventional time-and-rate scheduling method performed between a UE and a Node B;
FIG 7 is a diagram illustrating a conventional E-DCH operation of a UE located in a soft handover region;
FIG 8 is a concept diagram illustrating a conventional communication between an E-DCH transmitting UE, cells, and Node Bs;
FIG. 9 is a signaling diagram illustrating a procedure for transmitting UL load condition information over a BCH according to an embodiment of the present invention;
FIG. 10 is a signaling diagram illustrating a procedure for transmitting UL load condition information over a dedicated channel according to an embodiment of the present invention;
FIG. 11 is a flowchart illustrating an operation of selecting a serving scheduling cell according to an embodiment of the present invention;
FIG. 12 is a diagram illustrating an apparatus for determining a serving scheduling cell according to an embodiment of the present invention;
FIG. 13 is a signaling diagram illustrating a procedure for setting a cell ID according to an embodiment of the present invention;
FIG. 14 is a diagram illustrating a UE apparatus for transmitting serving scheduling cell information using a DPCCH according to an embodiment of the present invention;
FIG 15 is a diagram illustrating a UE apparatus for transmitting serving scheduling cell information using an E-DPCCH according to an embodiment of the present invention; and
FIG. 16 is a diagram illustrating a structure of a MAC-e PDU for transmitting serving scheduling cell information according to an embodiment of the present invention.

**DETAILED DESCRIPTION OF EXEMPLARY EMBODIMENTS**

Several exemplary embodiments of the present invention will now be described in detail with reference to the annexed drawings. In the following description, a detailed description of known functions and configurations incorporated herein has been omitted for conciseness.
The present invention makes up for the defects (such as poor quality and loss of signal) that when a user equipment (UE) is located in a soft handover region in a system supporting an enhanced uplink dedicated channel (E-DCH), downlink signaling information increases in amount and a UE receiving scheduling assignment information cannot definitely determine a transport format (TF) for the E-DCH. In addition, the present invention selects serving (or optimal) scheduling cell/Node B for efficient scheduling and signals information accompanying therewith.

Embodiments of the present invention aim to improve E-DCH scheduling of a UE located in a soft handover region.

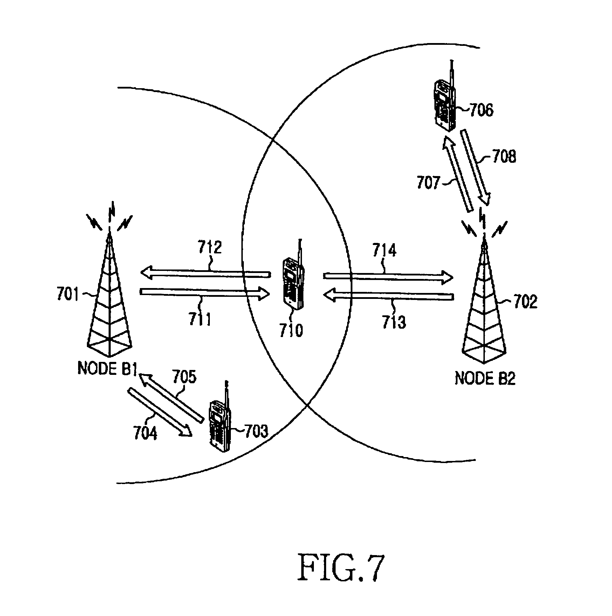

A conventional soft handover operation will now be described with reference to FIG. 7. In FIG. 7, a Node B1 701 and a Node B2 702 can receive E-DCH data, and UE1 through UE3 703, 706 and 710 can transmit E-DCH data. The UE1 703 and the UE2 706 do not belong to a soft handover region, and undergo E-DCH scheduling by only the Node B1 701 and the Node B2 702, respectively. Therefore, the UE1 703 can receive scheduling assignment information 704 from the Node B1 701, and transmit E-DCH data 705 using the scheduling assignment information 704. On the other hand, the UE2 706 can receive scheduling assignment information 707 from the Node B2 702, and transmit E-DCH data 708 using the scheduling assignment information 707.

However, the UE3 710 belonging to the soft handover region has both the Node B1 701 and the Node B2 702 as elements of its active set. Therefore, the UE3 710 can receive signals transmitted from the Node B1 701 and the Node B2 702, and both the Node B1 701 and the Node B2 702 also can receive a signal transmitted by the UE3 710. Hence, for E-DCH data transmission of the UE3 710, the Node B1 701 and the Node B2 702 individually perform E-DCH scheduling on the UE3 710 and transmit scheduling assignment information 711 and 713 to the UE3 710, respectively. Because the UE3 710 receives separate scheduling assignment information from the Node B1 701 and the Node B2 702, it has difficulty in determining a transport format of E-DCH data 712 and 714. Accordingly, the UE3 710 located in the soft handover region performs E-DCH transmission in a method different from that of the UE1 703 and the UE2 706 located in a non-soft handover region.

In an embodiment of the present invention, UEs located in the soft handover region select the best Node B capable of increasing system performance and stability during scheduling, among the Node Bs belonging to their own active sets, as a "serving scheduling Node B," and provide the corresponding information to the selected serving scheduling Node B, and the serving scheduling Node B and non-serving scheduling Node Bs use different E-DCH scheduling methods. The simplest way of selecting the serving scheduling Node B is to select, as a serving scheduling Node B, the Node B that is most significantly affected by an E-DCH transmitted by a UE in terms of reception noise.

A description will now be made of the different scheduling methods used by the serving scheduling Node B and the non-serving scheduling Node Bs.

(a) In a System Using Only Rate Scheduling

A UE located in a soft handover region selects a serving scheduling Node B, and only the selected serving scheduling Node B performs E-DCH scheduling on the UE. That is, only the selected serving scheduling Node B transmits rate grant information to the UE. Node Bs, which are included in an active set of the UE but are non-serving scheduling Node Bs, do not perform E-DCH scheduling on the UE. In other words, the non-serving scheduling Node Bs transmit no rate grant information to the UE. The UE also receives rate grant information only from the serving scheduling Node B and uses the received rate grant information in determining a transport format of the E-DCH.

(b) In a System Using Only Time-and-Rate Scheduling

A UE located in a soft handover region selects a serving scheduling Node B, and only the selected serving scheduling Node B transmits scheduling assignment information to the UE and Node Bs, which are included in an active set of the UE but are non-serving scheduling Node Bs, do not perform scheduling on the UE. That is, the non-serving scheduling Node Bs transmit no scheduling assignment information to the UE. The scheduling assignment information includes an assigned rate and transmission-granted timing information. The UE also receives scheduling assignment information only from the serving scheduling Node B and uses the received scheduling assignment information in determining a transport format of the E-DCH.

(c) In a System Using Both Time Scheduling and Time-and-Rate Scheduling

A UE located in a soft handover region selects a serving scheduling Node B, and only the selected serving scheduling Node B performs rate scheduling and time-and-rate scheduling and transmits rate grant information or scheduling assignment information to the UE. The Node Bs, which are included in an active set of the UE but are non-serving scheduling Node Bs, perform only rate scheduling on the UE. That is, the non-serving scheduling Node Bs can transmit only the rate grant information to the UE. The UE receives rate grant information and scheduling assignment information from the serving scheduling Node B and receives only rate grant information from the non-serving scheduling Node Bs. The UE determines a transport format of the E-DCH using the scheduling assignment information from the serving scheduling Node B and the rate grant information from the non-serving scheduling Node Bs.

1. Determination of Serving Scheduling Cell/Node B

The technique most urgently needed to implement the scheduling method for UEs located in a soft handover region is a method for determining a serving scheduling Node B. A UE determines a serving scheduling Node B for E-DCH scheduling on the UE using various information received from a Node B and status information thereof.

A description will now be made of a method in which a UE located in a soft handover region determines a serving scheduling Node B. In the following description, it will be assumed that each Node B comprises a plurality of cells and the cells are distinguished according to their unique Frequency Allocations (FAs) and scrambling codes. In this case, the UE can select a particular cell as a serving scheduling cell, or select a Node B to which the particular cell belongs as a serving scheduling Node B.

According to an embodiment of the present invention, a UE located in a soft handover region selects a cell having the minimum path loss among the cells belonging to its active set, and selects a Node B to which the selected cell belongs as a serving scheduling Node B. A detailed selection method will be described below according to an embodiment of the present invention.

(a) Selection Method Considering Downlink Path Loss of each Cell/Node B

Each of the cells with which a UE is communicating has a common control pilot channel (CPICH). Because the UE measures received signal code power (RSCP) of the CPICH and receives transmission power of the CPICH from the system through an upper layer signaling path, the UE calculates a downlink path loss (Downlink_Path_Loss) value of each cell using Equation (1) below.

$$Downlink\_Path\_Loss\ (dB) = Primary\ CPICH\ Tx\ power\ (dB) - CPICH\_RSCP\ (dB) \qquad \text{Equation (1)}$$

where 'Primary CPICH Tx power' denotes transmission power of a CPICH received through an upper layer signaling path, and CPICH_RSCP denotes an RSCP for the CPICH.

After calculating downlink path loss values for the cells belonging to its active set using Equation (1), the UE selects a serving scheduling Node B by comparing the calculated downlink path loss values with each other. The downlink path loss value becomes a parameter representing an optimal channel condition between a Node B and a UE, and a Node B having the minimum path loss value is most significantly affected during uplink transmission of the UE. Although there is some possible difference between an uplink path loss value and a downlink path loss value, it can be considered that the downlink path loss value is equal to the uplink path loss value in a long time interval.

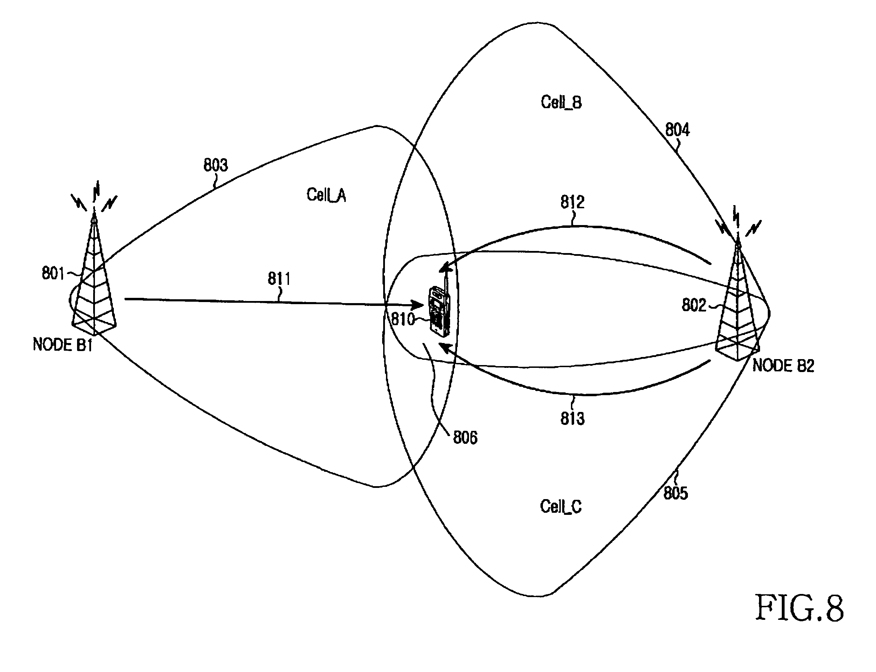

FIG 8 is a concept diagram illustrating a conventional communication between a UE located in a soft handover region and a plurality of Node Bs. Referring to FIG. 8, a Node B1 801 is managing a cell_A 803, and a Node B2 802 is managing a cell_B 804 and a cell_C 805. A UE 810 located in a region 806, where the cell_A 803, the cell_B 804 and the cell_C 805 overlap, has the cells 803, 804 and 805 as elements of its active set, and the Node Bs 801 and 802 are included in the active set. The cells 803, 804 and 805 transmit CPICHs 811, 812 and 813, respectively, and the UE 810 receives the CPICHs 811, 812 and 813 from the cells 803, 804 and 805, respectively, and has already received information regarding transmission power of the CPICHs through an upper layer signaling path. Therefore, the UE 810 calculates downlink path loss values based on differences between CPICH RSCP and CPICH transmission power of the cells 803, 804 and 805, and selects a cell having the minimum path loss value by comparing the calculated path loss values. Then the UE 810 determines the selected cell as a serving scheduling cell, or determines a Node B including the selected cell as a serving scheduling Node B.

In the foregoing description, a method for selecting a cell having the minimum path loss value by comparing path loss values has been proposed. In another embodiment, a UE can select a serving scheduling Node B by selecting a Node B having the minimum path loss value. That is, because uplink signals received from several cells managed by one Node B are soft-combined in the Node B, a UE can calculate path loss values per Node B. A procedure for calculating path loss values per Node B is equal to the foregoing procedure for calculating path loss values per cell. That is, a UE obtains a path loss value of a Node B by summing up path loss values for all cells belonging to the Node B. Then, a Node B having the minimum path loss value is selected as the serving scheduling Node B.

(b) Selection Method Using RoT

In selecting a serving scheduling Node B, a UE considers an uplink (UL) load condition as an additional parameter in addition to the foregoing path loss value of a CPICH. The UL load condition information includes an excess, such as RoT, of uplink resources that a Node B uses in scheduling UEs. That is, a Node B having a less excess of uplink resources is more significantly affected by uplink transmission of UEs. Therefore, a UE selects a Node B having the maximum RoT as a serving scheduling Node B.

In order to allow a UE to use the UL load condition in a process of determining a serving scheduling Node B, a Node B provides UL load condition information to the UE. A UE, when it is located in a soft handover region, receives UL load condition information from all cells included in its active set. Therefore, a new procedure for transmitting the UL load condition information should be added, and the following methods are available.

The UL load condition information can be defined on a per-cell basis, and a Node B managing a cell has UL load condition information of the cell. Herein, RoT can be calculated as a ratio of a thermal noise's power spectral density (No) of a Node B to a full-reception band's power spectral density (Io) of the Node B. Therefore, the RoT becomes a radio resource that the Node B can assign for an uplink packet data service in the uplink. Because the UL load condition information is common to all UEs belonging to the cell, it is preferable in terms of resource efficiency to transmit the UL load condition information to all of the UEs at a time rather than separately transmitting the UL load condition information to each of the UEs.

A method for transmitting the UL load condition information to all UEs belonging to one cell uses a broadcasting channel (BCH). The BCH, which is a channel defined for each cell, uses predefined coding and a predefined transport format so that all UEs included in each cell can use information restricted to the cell. Therefore, not only a UE having no dedicated channel but also a UE in a cell-dedicated channel (CELL-DCH) state, having a dedicated channel, acquire the UL load condition information by receiving and decoding the BCH, for an E-DCH service.

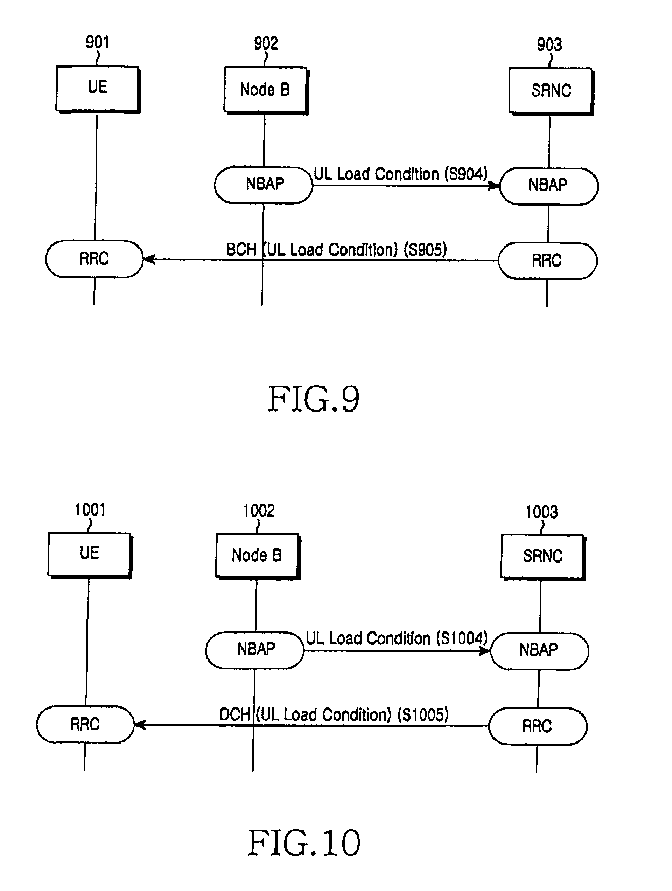

FIG. 9 is a signaling diagram illustrating a procedure for transmitting UL load condition information to a UE over a BCH according to an embodiment of the present invention. Referring to FIG 9, a UE 901 belongs to a cell managed by a Node B 902. In step S904, the Node B 902 transmits UL load condition information of the cell to a serving radio network controller (SRNC) 903 that controls the UE 901, through a Node B Application Part protocol (NBAP) signaling. In step S905, the SRNC 903 transmits the UL load condition information to the UE 901 through an RRC signaling that uses a BCH.

In another embodiment, because the UL load condition information is needed by only the UEs located in a soft handover region, the UL load condition information can be transmitted to only the UEs located in the soft handover region rather than all the UEs in the cell. For example, an SRNC can transmit UL load condition information to each UE located in a soft handover region using a dedicated channel (DCH).

FIG. 10 is a signaling diagram illustrating a procedure for transmitting UL load condition information through an RRC signaling according to an embodiment of the present invention. Referring to FIG. 10, a UE 1001 belongs to a cell managed by a Node B 1002 and is located in a soft handover region. In step S1004, the Node B 1002 transmits UL load condition information of the cell to an SRNC 1003 controlling the UE 1001, through an NBAP signaling. In step S1005, the SNRC 1003 transmits the UL load condition information to the UE 1001 through an RRC signaling that uses a DCH.

In the foregoing description, a method for transmitting UL load condition information using a BCH or a DCH has been proposed. However, it would be obvious that another channel or method capable of transmitting UL load condition information to a UE that performs an uplink packet data service in a cell, a UE located in a soft handover region, or a UE requiring the UL load condition information can also be implemented using embodiments of the present invention.

(c) Selection Method Using Hybrid Automatic Transmission Request (HARQ)

Because an E-DCH supports HARQ, a UE receives an acknowledge (ACK) or a non-acknowledge (NACK) as feedback information for E-DCH data from a Node B after transmitting the E-DCH data. In this case, a UE located in a soft handover region receives the ACK/NACK from a plurality of Node Bs. Therefore, the UE located in the soft handover region can determine that a Node B having a higher ACK ratio among Node Bs belonging to an active set of the UE is a Node B having a better uplink channel condition, such as a Node B that is most significantly affected during uplink transmission of the UE. As a result, the UE selects a Node B having the highest ACK transmission ratio as a serving scheduling Node B.

(d) Selection Method Using Downlink Path Loss Information, UL Load Condition Information and ACK Ratio Information

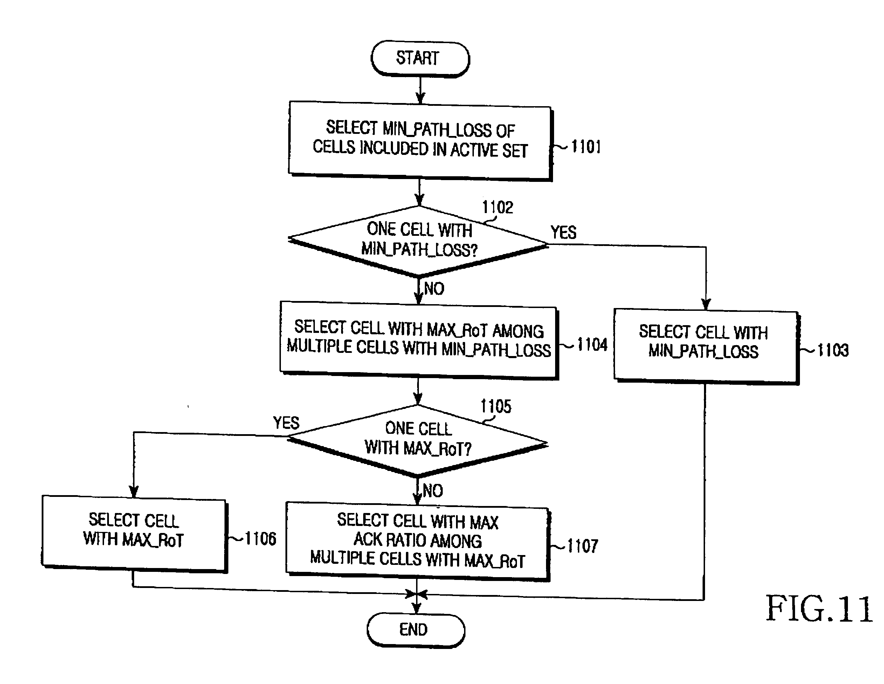

This selection method will now be described in detail with reference to FIG. 11. FIG. 11 is a flowchart illustrating a method in which a UE located in a soft handover region finally selects a serving scheduling cell or a serving scheduling Node B using the foregoing information according to an embodiment of the present invention.

Referring to FIG. 11, in step 1101, a UE compares downlink path loss values Path_loss for all cells included in its active set, and selects at least one cell having the minimum path loss value Min_Path_loss among the cells. In the process of performing the step 1101, there can be cells possibly having the same path loss value according to a quantization method of the path loss values. Therefore, in step 1102, the UE determines whether the number of cells having the minimum path loss value is 1. If the number of cells having the minimum path loss value is 1, the UE selects in step 1103 a Node B managing a cell having the minimum path loss value as a serving scheduling Node B.

However, if it is determined in step 1102 that the number of cells having the minimum path loss value is greater than 1, the UE selects in step 1104 at least one cell having the highest UL load condition, for example, the maximum RoT value Max_RoT, among the cells having the minimum path loss value. Similarly, because there can be several cells possibly having the maximum RoT value, the UE determines in step 1105 whether the number of cells having the maximum RoT value is 1. If the number of cells having the maximum RoT value is 1, the UE selects in step 1106, a Node B managing a cell having the maximum RoT value as a serving scheduling Node B. In contrast, if the number of cells having the maximum RoT value is greater than 1, the UE compares in step 1107, the ACK ratios of the cells having the maximum RoT value, and selects a Node B of a cell having the highest ACK ratio of the cells having the maximum RoT value as a serving scheduling Node B.

Although a Node B managing a particular cell is selected herein as a serving scheduling Node B, the UE can select the particular cell as a serving scheduling cell in an alternative embodiment. In addition, although a serving scheduling cell is selected herein on a per-cell basis, a serving scheduling Node B can be selected on a per-Node B basis in an alternative method. A detailed description thereof will be made with reference to FIG 11.

Because uplink signals received from several cells managed by one Node B are soft-combined in the Node B, a UE can calculate path loss values per Node B. That is, the UE calculates a path loss value of the Node B using the sum of path loss values for all cells belonging to the Node B. Then the UE selects a Node B having the minimum sum of path loss values instep 1101, and determines in step 1102 whether the number of Node Bs having the minimum sum of path loss values is 1. If the number of Node Bs having the minimum sum of path loss values is 1, the UE selects in step 1103 a Node B having the minimum sum of path loss value as a serving scheduling Node B. However, if it is determined in step 1102 that the number of Node Bs having the minimum sum of path loss values is greater than 1, the UE performs step 1104 and its succeeding process as descried above.

In the process of performing the embodiment of the present invention illustrated in FIG. 11, the UE needs information on a Node B to which the cells included in its active set belong. That is, the UE should have information on a Node B to which its cells belong in order to sum up path loss values for a plurality of cells belonging to the same Node B. To this end, an SRNC controlling the UE transmits information on a Node B to which the cells included in the active set belong, to the UE using an RRC message.

Although the embodiment of the present invention uses the scheduling information in the order of downlink path loss information, UL load condition information and ACK ratio information in selecting a serving scheduling cell/ Node B, the application order of the scheduling information is subject to change at the discretion of a system designer. In another alternative embodiment, a serving scheduling cell/Node B can be selected using only some of the scheduling information. For example, a UE can select a serving scheduling cell/Node B using at least one of the downlink path loss information, the UL load condition information and the ACK ratio information.

(e) Selection Method Using Weighted-Combination of Downlink Path Loss Information, UL Load Condition Information and ACK Ratio Information

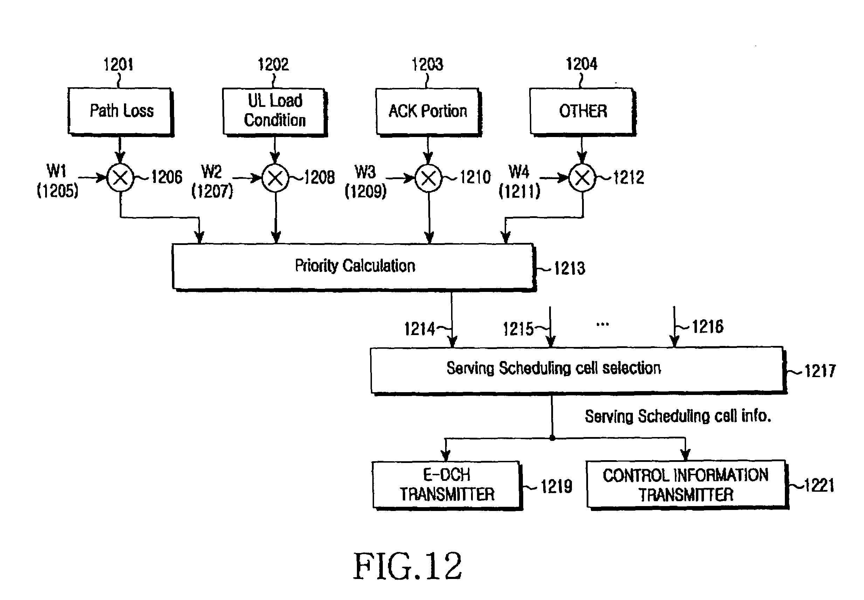

This selection method according to an embodiment of the present invention will now be described in detail with reference to FIG. 12. In FIG. 12, a UE calculates the sum of a downlink path loss value 1201, UL load condition information (for example, RoT value) 1202, an ACK ratio value 1203, and other reference value 1204, for each of the cell included its active set. As illustrated in FIG. 12, the path loss value 1201 is multiplied by a weight W1 (1205) in a multiplier 1206, the UL load condition information (RoT value) 1202 is multiplied by a weight W2 (1207) in a multiplier 1208, the ACK ratio value 1203 is multiplied by a weight W3 (1209) in a multiplier 1210, and the other reference value 1204 is multiplied by a weight W4 (1211) in a multiplier 1212. Because the RoT value 1202 and the ACK radio value 1203 are in direct proportion to scheduling priority but the downlink path loss value 1201 is in inverse proportion to the scheduling priority, the weight W1(1205) can have a negative value unlike the other weights 1207 and 1209. In another case, an inverse value of the downlink path loss value 1201 can be input to the multiplier 1206.

A priority calculator 1213 calculates a weighted sum (or weighted combination) of the values multiplied by the weights, and outputs a priority 1214 for a corresponding cell based on the weighted sum to a serving scheduling cell selector 1217. The serving scheduling cell selector 1217 receives priorities 1214, 1215 and 1216 for all of the cells included in an active set of the UE, and compares the weighted sums 1214, 1215 and 1216 to select a Node B managing a cell having the highest priority as a serving scheduling Node B. Alternatively, the serving scheduling cell selector 1217 selects a cell having the highest weighted sum as a serving scheduling cell.

In an alternative embodiment, a UE calculates a weighted sum of a summed path loss value, a summed RoT value and a summed ACK ratio value for each of the cells of a Node B, and compares weighted sums calculated for a plurality of Node Bs to select a Node B having the maximum weighted sum as a serving scheduling cell.

The serving scheduling cell selector 1217 delivers information representing the serving scheduling cell selected by the selection method illustrated in FIG. 12 or one of the other foregoing selection methods, to an E-DCH transmitter 1219 and a control information transmitter 1221. The control information transmitter 1221 transmits information regarding the serving scheduling cell to a plurality of cells in communication with the UE, and the E-DCH transmitter 1219 recognizes a serving scheduling cell or non-serving scheduling cells according to the serving scheduling cell information, determines an E-DCH rate according to scheduling assignment information or rate grant information received from the serving scheduling cell and the non-serving scheduling cells, and transmits E-DCH data at the determined E-DCH rate.

### 2. Notification of Serving Scheduling Cell/Node B's ID

So far, a description has been made of elements needed in selecting a serving scheduling Node B and an embodiment of a method of the present invention for selecting the serving scheduling Node B. Next, a description will be made of an embodiment of a method of the present invention for notifying a serving scheduling Node B selected by a UE located in a handover region.

In a process of selecting the serving scheduling Node B, a serving scheduling cell is first selected. In this case, a UE informs a system of a cell ID of the serving scheduling cell using a cell ID and the system can determine a Node B comprising a cell of which a cell ID is identical to a cell ID of the serving scheduling cell, as a serving scheduling Node B. To this end, a signaling for setting cell IDs is needed. That is, the UE and the Node Bs should have the same cell ID, in order for the UE to inform the system of a serving scheduling cell or a serving scheduling Node B using the cell ID.

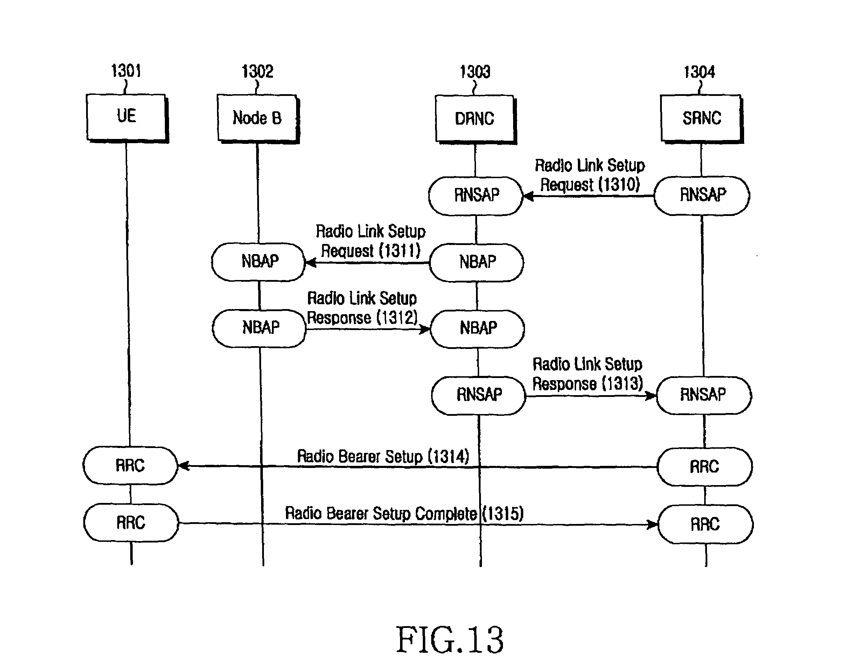

A signaling method for setting a cell ID according to an embodiment of the present invention will now be described with reference to FIG. 13. Referring to FIG. 13, a UE 1301 is in communication with cells belonging to a Node B 1302, and the Node B 1302 is connected to a DRNC 1303 via an Iub connection and makes an Iur connection to an SRNC 1304 for controlling the UE 1301 and the DRNC 1303. For setup of an E-DCH, if the SRNC 1304 sends a Radio Link Setup Request message 1310 for Radio Network Subsystem Application Part protocol (RNSAP) signaling, to the DRNC 1303, the DRNC 1303 delivers information preferably included in the Radio Link Setup Request message 1310 to the Node B 1302 through a Radio Link Setup Request message 1311 for NBAP signaling. The Radio Link Setup Request message 1310 and 1311 include information regarding the cells with which the UE 1301 can communicate, and the cell information preferably includes cell IDs for the cells.

The Node B 1302 receiving the Radio Link Setup Request message 1311 transmits a Radio Link Setup Response message 1312 for NBAP signaling to the DRNC 1303 in response to the Radio Link Setup Request message 1311, and the DRNC 1303 transmits a Radio Link Setup Response message 1313 to the SRNC 1304 in response to the Radio Link Setup Request message 1310. The foregoing process is performed in the same way for all cells included in an active set of the UE 1301.

Subsequently, in order to inform the UE 1301 of a cell ID for each of the cells included in the active set of the UE 1301, the SRNC 1304 notifies a cell ID assigned to each cell to the UE 1301 using a Radio Bearer Setup message 1314 for RRC signaling. The UE 1301 sends a Radio Bearer Setup Complete message 1315 for RRC signaling to the SRNC 1304, completing setup of a cell ID.

Thereafter, the SRNC 1304 controlling the UE 1301 transmits information on a Node B to which each cell included in the active set of the UE 1301 belongs, to the UE 1301 using an RRC message like the Radio Bearer Setup message 1314 of FIG. 13.

A process of selecting a serving scheduling cell or a serving scheduling Node B has been described so far. After the process of selecting a serving scheduling cell or a serving scheduling Node B, if a UE selects a cell ID for a serving scheduling cell or a Node B ID for a serving scheduling Node B using the following several methods according to an embodiment of the present invention, the UE provides information on the selected ID to the Node Bs with which it is communicating.

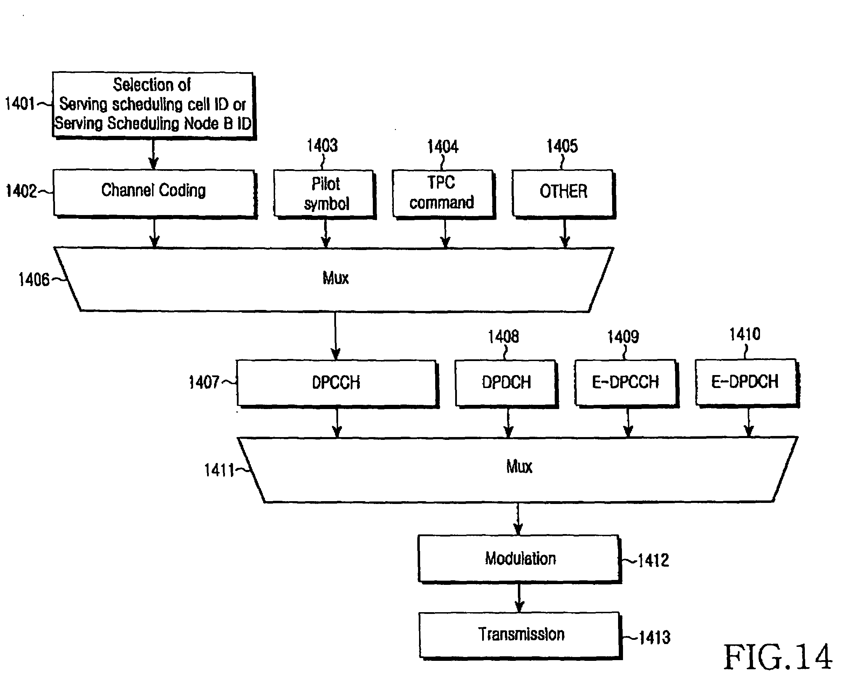

In a first method, a UE transmits a serving scheduling cell's ID or a serving scheduling Node B's ID to the Node Bs using a dedicated physical control channel (DPCCH). With reference to FIG. 14, a description will now be made of a UE apparatus for transmitting a serving scheduling cell's ID or a serving scheduling Node B's ID determined in the UE to Node Bs using a DPCCH according to an embodiment of the present invention.

Referring to FIG. 14, a serving scheduling cell/Node B ID selector 1401 selects a serving scheduling cell ID or a serving scheduling Node B ID, and the cell ID/Node B ID is channel-coded in a channel coder 1402 to provide noise robustness in a channel. The coded signal is multiplexed with a pilot signal 1403, a power control signal 1404 and other signals 1405 in a multiplexer 1406, generating DPCCH data 1407. The DPCCH data 1407 is multiplexed with a dedicated physical data channel (DPDCH) 1408, enhanced DPCCH (E-DPCCH) data 1409 and enhanced DPDCH (E-DPDCH) data 1410 in a multiplexer 1411, and then modulated by a modulator 1412. The modulated signal is uplink-transmitted to a Node B by a transmitter 1413. Herein, the E-DPDCH is a physical channel to which an E-DCH is mapped, and the E-DPCCH, which is control information for an E-DCH, is a physical channel for carrying a transport parameter for, for example, an E-DPDCH.

In a second embodiment, a UE transmits a serving scheduling cell ID or a serving scheduling Node B ID using an E-DPCCH. The E-DPCCH is an uplink channel transmitting control information for an E-DCH, and information carried on the E-DPCCH, which includes HARQ information and a transport block size (TBS).

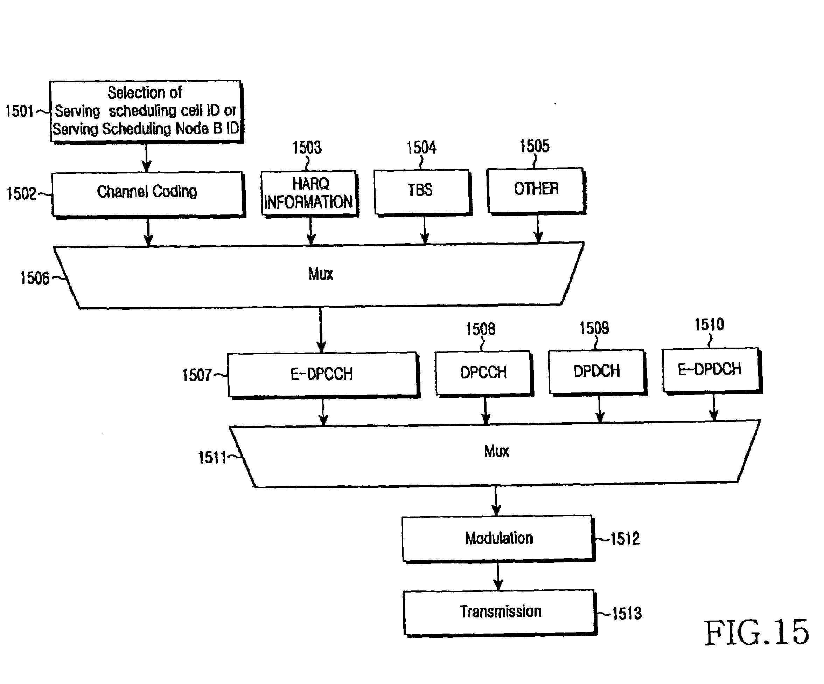

With reference to FIG 15, a description will now be made of a UE apparatus for transmitting a serving scheduling cell's ID or a serving scheduling Node B's ID determined in the UE to Node Bs using an E-DPCCH.

Referring to FIG. 15, a serving scheduling cell/Node B ID selector 1501 selects a serving scheduling cell ID or a serving scheduling Node B ID, and the cell ID/Node B ID is channel-coded in a channel coder 1502 to provide noise robustness in a channel. The coded signal is multiplexed with HARQ-related information 1503, TBS information 1504 and other control information 1505 in a multiplexer 1506, which generates E-DPCCH data 1507. The E-DPCCH data 1507 is multiplexed with DPCCH data 1508, DPDCH data 1509 and E-DPDCH data 1510 in a multiplexer 1511, and then modulated by a modulator 1512. The modulated signal is uplink-transmitted to a Node B by a transmitter 1513.

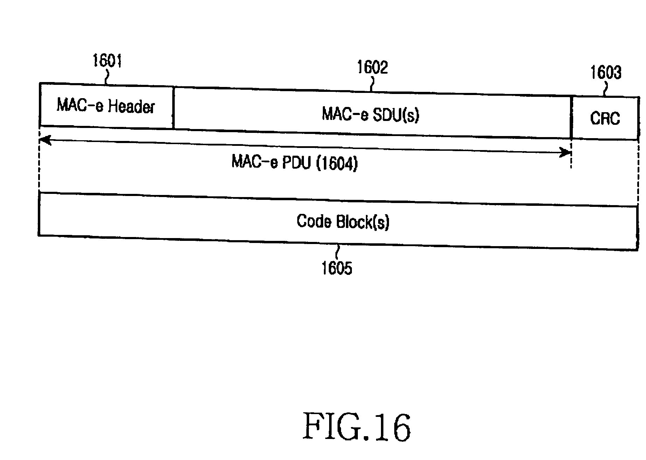

In a third embodiment, a UE comprises a serving scheduling cell ID or a serving scheduling Node B ID in a MAC-e protocol data unit (PDU) of an E-DCH before transmission. A data format of the E-DCH is illustrated in FIG. 16.

Referring to FIG. 16, a MAC-e service data unit (SDU) 1602, which is a user data part, is added to a MAC-e header 1601 including HARQ or scheduling-related information, thereby generating a MAC-e PDU 1604. That is, the MAC-e header 1601 should be construed herein as a part comprising all the remaining information except the user data, rather than information located at the head of the MAC-e PDU 1604. The MAC-e PDU 1604 is added to cyclic redundancy check (CRC) 1603, thereby generating a code block(s) 1605 used in a physical layer. A UE comprises the serving scheduling cell ID or the serving scheduling Node B ID in the MAC-e header 1601 before transmission, and a Node B can determine whether it includes a serving scheduling cell or becomes a serving scheduling Node B, by receiving and decoding the MAC-e header 1601. When the UE uses the MAC-e PDU in this way, a control information transmitter for transmitting a serving scheduling Node B ID is equal to the E-DCH transmitter.

3. Scheduling Operation

A description will now be made of a detailed scheduling operation for a serving scheduling Node B and a non-serving scheduling Node B after a UE located in a soft handover region selects the serving scheduling cell or the serving scheduling Node B and performs signaling thereon according to an embodiment of the present invention. As described above, the serving scheduling Node B has the central authority to schedule a UE located in a soft handover region. That is, the serving scheduling Node B can use scheduling assignment information for time-and-rate scheduling, use rate grant information for rate scheduling, or use the scheduling assignment information for time-and-rate scheduling and the rate grant information for rate scheduling together.

However, the non-serving scheduling Node B, which is included in an active set of the UE but is not a serving scheduling Node B, does not have the central authority to schedule the UE. That is, the non-serving scheduling Node B performs passive scheduling so as to minimize an influence of the UE, rather than actively assigning its uplink resource to the UE. A scheduling method according to an embodiment of the present invention for a soft-handover UE of a non-serving scheduling Node B will now be described below. For convenience, it will be assumed herein that a serving scheduling Node B transmits scheduling assignment information.

Although a non-serving scheduling Node B receives an uplink signal from a UE located in a soft handover region, it is less affected by uplink reception compared with the serving scheduling Node B. Therefore, a description will now be made of scheduling for which the foregoing resource situation of the non-serving scheduling Node B is efficiently taken into consideration.

In a first embodiment, a non-serving scheduling Node B performs scheduling using a 1-bit signal capable of representing two types of information. More specifically, the non-serving scheduling Node B transmits a 1-bit scheduling grant capable of representing Don't Care information and Down information to UEs located in a soft handover region.

If the scheduling grant received from the non-serving scheduling Node B represents the Don't Care information, the UE determines a data rate of an E-DCH using only the scheduling assignment information from the serving scheduling Node B. However, if the scheduling grant received from the non-serving scheduling Node B represents the Down information, the UE decreases a rate of the E-DCH by one step, disregarding the scheduling assignment information from the serving scheduling Node B.

The scheduling grant is transmitted using one bit, and the information having the highest occurrence probability is subjected to discontinuous transmission (DTX). That is, if the Don't Care information is higher than the Down information in occurrence probability, the non-serving scheduling Node B represents the Don't Care information with a '0' value by transmitting no scheduling grant over a physical channel, and transmits the Down information over a physical channel using a '+1' or '-1' value. If the Down information is higher than the Don't Care information in occurrence probability, the foregoing method can be performed in the opposite manner.

If there are two or more non-serving scheduling Node Bs, the UE receives two or more scheduling grants. In this case, the UE determines a final scheduling grant by combining the two or more scheduling grants in the following method.

In an 'OR-of-Down' embodiment, if any one of the received scheduling grants is Down information, the UE determines the final scheduling grant as Down. In a weighted-sum embodiment, the UE multiplies scheduling grant values received from the non-serving scheduling Node Bs by weights assigned for their associated Node Bs and combines the multiplication results, generating a weighted-combined scheduling grant. Thereafter, the UE determines a final scheduling grant according to whether the weighted-combined scheduling grant represents Don't Care or Down. Herein, a scheduling grant value to be multiplied by a weight assigned for each Node B is a soft-decision value representing a real number or a hard-decision value representing an integer.

In a second embodiment, a non-serving scheduling Node B performs scheduling using a 1-bit signal capable of representing three types of information. More specifically, the non-serving scheduling Node B transmits a 1-bit scheduling grant capable of representing Don't Care information, Down information and Marginal information, to UEs located in a soft handover region.

If the scheduling grant received from the non-serving scheduling Node B represents the Don't Care information, the UE determines a data rate of an E-DCH using only the scheduling assignment information from the serving scheduling Node B. However, if the scheduling grant received from the non-serving scheduling Node B represents the Down information, the UE decreases the rate of the E-DCH by one step, disregarding the scheduling assignment information from the serving scheduling Node B. In addition, if the scheduling grant received from the non-serving scheduling Node B represents the Marginal information, the UE determines whether to decrease the rate of the E-DCH by one step, using a probability-based method. That is, the UE generates a random value and follows scheduling of the serving scheduling Node B if the random value is greater than a first reference value. If the random value is less than a second reference value, the UE decreases the rate of the E-DCH by one step. However, if the random value ranges between the first reference value and the second reference value, the UE keeps the rate of the E-DCH

The scheduling grant is transmitted using one bit, and the information having the highest occurrence probability is subjected to discontinuous transmission (DTX). That is, if the Don't Care information is higher than the other information in occurrence probability, the non-serving scheduling Node B represents the Don't Care information with a '0' value by transmitting no scheduling grant over a physical channel, and transmits the Down information and the Marginal information over a physical channel using '+1' and '-1' values, respectively. However, if the Down information or the Marginal information is higher than the Don't Care information in occurrence probability, the information having the highest occurrence probability is subjected to discontinuous transmission.

If there are two or more non-serving scheduling Node Bs, the UE receives two or more scheduling grants. In this case, the UE determines a final scheduling grant by combining the two or more scheduling grants in the following embodiment.

In a weighted combining embodiment, the UE multiplies scheduling grant values received from the non-serving scheduling Node Bs by weights assigned for their associated Node Bs and combines the multiplication results, generating a weighted-combined scheduling grant. Thereafter, the UE determines a final scheduling grant according to whether the weighted-combined scheduling grant represents Don't Care, Down or Marginal. Herein, a scheduling grant value to be multiplied by a weight assigned for each Node B is a soft-decision value representing a real number or a hard-decision value representing an integer.

As can be understood from the foregoing description, embodiments of the present invention provide an apparatus and a method for performing efficient scheduling on a UE located in a soft handover region in performing rate scheduling for uplink packet transmission in an asynchronous WCDMA communication system using an E-DCH. In addition, embodiments of the present invention provide an apparatus and a method for selecting a serving scheduling Node B among Node Bs belonging to an active set of the UE, using loss delay information, UL load condition information, and HARQ information. Moreover, embodiments of the present invention provide an apparatus and a method in which a UE transmits information on the selected serving scheduling Node B to the Node Bs included in its active set.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for transmitting uplink packet data by a user equipment (UE) that communicates with a plurality of cells due to soft handover in a mobile communication system supporting an enhanced uplink packet data service, the method comprising the steps of:

   selecting a serving scheduling cell for scheduling the uplink packet data service for the UE according to at least one of downlink path loss information, uplink load condition information and acknowledge (ACK) ratio information;

providing information indicating the selected serving scheduling cell to the plurality of cells;

receiving rate grant information for transmission of uplink packet data from the selected serving scheduling cell and unselected non-serving scheduling cells from among the plurality of cells; and

transmitting the uplink packet data to the plurality of cells according to the rate grant information.

2. The method of claim 1, wherein the uplink packet data service is achieved through an enhanced uplink dedicated channel (E-DCH) of a Wideband Code Division Multiple Access (WCDMA) system.

3. The method of claim 1, wherein the downlink path loss information is calculated as a difference value between received signal code power (RSCP) measured for a common control pilot channel (CPICH) transmitted by each of the plurality of cells and transmission power of the CPICH.

4. The method of claim 1, wherein the uplink load condition information represents a Rise-over-Thermal (RoT) value for the plurality of cells, and is received at the UE from the plurality of cells through a broadcasting channel (BCH) or a dedicated channel (DCH).

5. The method of claim 1, wherein the ACK ratio information is calculated as a ratio of ACKs among the ACKs and non-acknowledges (NACKs) received for the uplink packet data service, for each of the plurality of cells.

6. The method of claim 1, wherein the selecting step comprises the step of calculating weighted sums for the plurality of cells by applying predetermined weights to at least two of the downlink path loss information, the uplink load condition information and the ACK ratio information, and selecting a cell having the highest priority as the serving scheduling cell according to the weighted sums.

7. The method of claim 1, wherein the selecting step comprises the step of selecting the serving scheduling cell by sequentially applying the downlink path loss information, the uplink load condition information and the ACK ratio information.

8. The method of claim 1, wherein the providing step comprises the step of transmitting a cell ID indicating the selected serving scheduling cell to the plurality of cells through a dedicated physical control channel (DPCCH).

9. The method of claim 1, wherein the providing step comprises the step of transmitting a cell ID indicating the selected serving scheduling cell to the plurality of cells through an enhanced dedicated physical control channel (E-DPCCH) for the uplink packet data service.

10. The method of claim 1, wherein the providing step comprises the step of transmitting a cell ID indicating the selected serving scheduling cell to the plurality of cells over a media access control-enhanced protocol data unit (MAC-e PDU) for the uplink packet data service.

11. The method of claim 1, wherein the transmitting step comprises the steps of:

determining a final scheduling grant by combining rate grant values representing rate grant information received from the non-serving scheduling cells;

if the final scheduling grant represents 'Down', decreasing an uplink rate for the uplink packet data service by one step;

if the final scheduling grant does not represent 'Down' or no rate grant value is received from the non-serving scheduling cells, controlling the uplink rate according to rate grant information received from the serving scheduling cell; and

transmitting the uplink packet data to the plurality of cells using the uplink rate.

12. The method of claim 11, wherein if any one of the rate grant values received from the non-serving scheduling cells represents 'Down', the UE determines the final scheduling grant as 'Down'.

13. The method of claim 11, wherein if a weighted sum of scheduling grants calculated by applying predetermined weights to cells corresponding to rate grant values received from the non-serving scheduling cells represents 'Down', the UE determines the final scheduling grant as 'Down'.

**14.** The method of claim 1, wherein the transmitting step comprises the steps of:

determining a final scheduling grant by combining rate grant values representing rate grant information received from the non-serving scheduling cells;

if the final scheduling grant represents 'Down', decreasing an uplink rate for the uplink packet data service by one step;

if the final scheduling grant represents 'Don't Care' or no rate grant value is received from the non-serving scheduling cells, controlling the uplink rate according to rate grant information received from the serving scheduling cell;

if the final scheduling grant represents 'Marginal', controlling the uplink rate according to rate grant information received from the serving scheduling cell on a probability basis using predetermined reference values, or decreasing the uplink rate by one step; and

transmitting the uplink packet data to the plurality of cells using the uplink rate.

**15.** The method of claim 14, wherein if any one of the rate grant values received from the non-serving scheduling cells represents 'Down', the UE determines the final scheduling grant as 'Down', if any one of the rate grant values represents 'Marginal', the UE determines the final scheduling grant as 'Marginal', and if all of the rate grant values represent 'Don't Care', the UE determines the fmal scheduling grant as 'Don't Care'.

**16.** The method of claim 14, wherein the UE determines the final scheduling grant as 'Down', 'Marginal' or 'Don't Care' according to a weighted sum of scheduling grants calculated by applying predetermined weights to cells corresponding to rate grant values received from the non-serving scheduling cells.

**17.** A user equipment (UE) apparatus for transmitting uplink packet data while communicating with a plurality of cells due to soft handover in a mobile communication system supporting an enhanced uplink packet data service, the apparatus comprising:

a serving scheduling cell selector for selecting a serving scheduling cell for scheduling the uplink packet data service for the UE according to at least one of downlink path loss information, uplink load condition information and acknowledge (ACK) ratio information;

a control information transmitter for transmitting identification information representing the selected serving scheduling cell to the plurality of cells; and

a data transmitter for receiving rate grant information for transmission of uplink packet data, from the selected serving scheduling cell and unselected non-serving scheduling cells among the plurality of cells, and transmitting the uplink packet data to the plurality of cells according to the rate grant information.

**18.** The apparatus of claim 17, wherein the uplink packet data service is achieved through an enhanced uplink dedicated channel (E-DCH) of a Wideband Code Division Multiple Access (WCDMA) system.

**19.** The apparatus of claim 17, wherein the downlink path loss information is calculated as a difference value between received signal code power (RSCP) measured for a common control pilot channel (CPICH) transmitted by each of the plurality of cells and transmission power of the CPICH.

**20.** The apparatus of claim 17, wherein the uplink load condition information represents a Rise-over-Thermal (RoT) value for the plurality of cells, and is received at the UE from the plurality of cells through a broadcasting channel (BCH) or a dedicated channel (DCH).

**21.** The apparatus of claim 17, wherein the ACK ratio information is calculated as a ratio of ACKs among the ACKs and non-acknowledges (NACKs) received for the uplink packet data service, for each of the plurality of cells.

**22.** The apparatus of claim 17, wherein the serving scheduling cell selector calculates weighted sums for the plurality of cells by applying predetermined weights to at least two of the downlink path loss information, the uplink load condition information and the ACK ratio information, and selects a cell having the highest priority as the serving scheduling cell according to the weighted sums.

**23.** The apparatus of claim 17, wherein the serving scheduling cell selector selects the serving scheduling cell by sequentially applying the downlink path loss information, the uplink load condition information and the ACK ratio information.

24. The apparatus of claim 17, wherein the control information transmitter transmits a cell ID indicating the selected serving scheduling cell to the plurality of cells through a dedicated physical control channel (DPCCH).

25. The apparatus of claim 17, wherein the control information transmitter transmits a cell ID indicating the selected serving scheduling cell to the plurality of cells through an enhanced dedicated physical control channel (E-DPCCH) for the uplink packet data service.

26. The apparatus of claim 17, wherein the control information transmitter transmits a cell ID indicating the selected serving scheduling cell to the plurality of cells over a media access control-enhanced protocol data unit (MAC-e PDU) for the uplink packet data service.

27. The apparatus of claim 17, wherein the data transmitter determines a final scheduling grant by combining rate grant values representing rate grant information received from the non-serving scheduling cells;
if the final scheduling grant represents 'Down', decreasing an uplink rate for the uplink packet data service by one step;
if the final scheduling grant does not represent 'Down' or no rate grant value is received from the non-serving scheduling cells, controlling the uplink rate according to rate grant information received from the serving scheduling cell; and
transmits the uplink packet data to the plurality of cells using the uplink rate.

28. The apparatus of claim 27, wherein if any one of the rate grant values received from the non-serving scheduling cells represents 'Down', the data transmitter determines the final scheduling grant as 'Down'.

29. The apparatus of claim 27, wherein if a weighted sum of scheduling grants calculated by applying predetermined weights to cells corresponding to rate grant values received from the non-serving scheduling cells represents 'Down', the data transmitter determines the final scheduling grant as 'Down'.

30. The apparatus of claim 17, wherein the data transmitter determines a final scheduling grant by combining rate grant values representing rate grant information received from the non-serving scheduling cells;
if the final scheduling grant represents 'Down', decreasing an uplink rate for the uplink packet data service by one step;
if the final scheduling grant represents 'Don't Care' or no rate grant value is received from the non-serving scheduling cells, controlling the uplink rate according to rate grant information received from the serving scheduling cell;
if the final scheduling grant represents 'Marginal', controlling the uplink rate according to rate grant information received from the serving scheduling cell on a probability basis using predetermined reference values, or decreasing the uplink rate by one step; and
transmits the uplink packet data to the plurality of cells using the uplink rate.

31. The apparatus of claim 30, wherein if any one of the rate grant values received from the non-serving scheduling cells represents 'Down', the data transmitter determines the final scheduling grant as 'Down', if any one of the rate grant values represents 'Marginal', the data transmitter determines the final scheduling grant as 'Marginal', and if all of the rate grant values represent 'Don't Care', the data transmitter determines the final scheduling grant as 'Don't Care'.

32. The apparatus of claim 30, wherein the data transmitter determines the final scheduling grant as 'Down', 'Marginal' or 'Don't Care' according to a weighted sum of scheduling grants calculated by applying predetermined weights to cells corresponding to rate grant values received from the non-serving scheduling cells.

33. A method for receiving uplink packet data from a user equipment (UE) by a Node B in communication with the UE that is performing soft handover, in a mobile communication system supporting an enhanced uplink packet data service, the method comprising the steps of:

receiving, from the UE, information representing a selected serving scheduling cell among a plurality of cells with which the UE communicates, wherein the serving scheduling cell is selected by the UE according to at least one of downlink path loss information, uplink load condition information and acknowledge (ACK) ratio information;
transmitting rate grant information representing a rate assigned for transmission of uplink packet data to the UE through the selected serving scheduling cell or unselected non-serving scheduling cells according to the serving scheduling cell information; and

receiving the uplink packet data from the UE according the rate grant information.

**34.** The method of claim 33, wherein the uplink packet data service is achieved through an enhanced uplink dedicated channel (E-DCH) of a Wideband Code Division Multiple Access (WCDMA) system.

**35.** The method of claim 33, wherein the downlink path loss information is calculated as a difference value between received signal code power (RSCP) measured for a common control pilot channel (CPICH) transmitted by each of the plurality of cells and transmission power of the CPICH.

**36.** The method of claim 33, wherein the uplink load condition information represents a Rise-over-Thermal (RoT) value for the plurality of cells, and is received at the UE from the plurality of cells through a broadcasting channel (BCH) or a dedicated channel (DCH).

**37.** The method of claim 33, wherein the ACK ratio information is calculated as a ratio of ACKs among the ACKs and non-acknowledges (NACKs) received for the uplink packet data service, for each of the plurality of cells.

**38.** The method of claim 33, wherein the step of receiving serving scheduling cell information comprises the step of receiving a cell ID indicating the selected serving scheduling cell from the UE through a dedicated physical control channel (DPCCH).

**39.** The method of claim 33, wherein the step of receiving serving scheduling cell information comprises the step of receiving a cell ID indicating the selected serving scheduling cell from the UE through an enhanced dedicated physical control channel (E-DPCCH) for the uplink packet data service.

**40.** The method of claim 33, wherein the step of receiving serving scheduling cell information comprises the step of receiving a cell ID indicating the selected serving scheduling cell from the UE over a media access control-enhanced protocol data unit (MAC-e PDU) for the uplink packet data service.

**41.** The method of claim 33, wherein the transmitting step comprises the step of transmitting rate grant information representing the assigned rate through the serving scheduling cell.

**42.** The method of claim 41, wherein the transmitting step comprises the step of transmitting rate grant information representing 'Down' or 'Don't Care' through the non-serving scheduling cells according to the assigned rate.

**43.** The method of claim 41, wherein the transmitting step comprises the step of transmitting rate grant information representing 'Down', 'Don't Care' or 'Marginal' through the non-serving scheduling cells according to the assigned rate.

**44.** A apparatus for receiving uplink packet data from a user equipment (UE) by a Node B in communication with the UE that is performing soft handover, in a mobile communication system supporting an enhanced uplink packet data service, the apparatus comprising:

a serving scheduling cell adapted to receive, from the UE, information representing the serving scheduling cell among the plurality of cells which the UE communicates with, wherein the serving scheduling cell is selected by the UE according to at least one of downlink path loss information, uplink load condition information and acknowledge (ACK) ratio information, and to transmit rate grant information representing a rate assigned for transmission of uplink packet data to the UE;

non-serving scheduling cells adapted to receive, from the UE, information representing the serving scheduling cell among the plurality of cells which the UE communicates with, wherein the serving scheduling cell is selected by the UE according to at least one of downlink path loss information, uplink load condition information and acknowledge (ACK) ratio information, and to transmit rate grant information representing 'DON'T CARE' or 'Down'

**45.** The apparatus of claim 44, wherein the 'DON'T CARE' is information instructing that the UE follows the rate grant information of the serving scheduling cell.

FIG.1

FIG.2

FIG.3

EP 1 594 335 A2

Node B

202
E-DCH SETUP

204
Scheduling information

PERFORM SCHEDULING
USING SCHEDULING INFO
RECEIVED FROM SEVERAL UEs ~206

208
SCHEDULING ASSIGNMENT INFO

210
DETERMINE TF OF E-DCH
BASED ON SCHEDULING
ASSIGNMENT INFO
RECEIVED FROM NODE B

212
TF-RELATED INFO

214
UL Packet data transmission using E-DCH

CREATE ACK/NACK INFO BY
DETERMINING PRESENCE OF
ERROR IN RECEIVED INFO ~216

218
ACK/NACK

FIG.4

FIG.5

EP 1 594 335 A2

FIG.6

EP 1 594 335 A2

FIG.7

FIG.8

EP 1 594 335 A2

901

**UE**

902

**Node B**

903

**SRNC**

NBAP ———— UL Load Condition (S904) ————▶ NBAP

RRC ◀———— BCH (UL Load Condition) (S905) ———— RRC

## FIG.9

1001

**UE**

1002

**Node B**

1003

**SRNC**

NBAP ———— UL Load Condition (S1004) ————▶ NBAP

RRC ◀———— DCH (UL Load Condition) (S1005) ———— RRC

## FIG.10

START

↓

SELECT MIN_PATH_LOSS OF
CELLS INCLUDED IN ACTIVE SET ~1101

↓

ONE CELL WITH
MIN_PATH_LOSS? ~1102 — YES → SELECT CELL WITH
MIN_PATH_LOSS ~1103

↓ NO

SELECT CELL WITH MAX_RoT AMONG
MULTIPLE CELLS WITH MIN_PATH_LOSS ~1104

↓

ONE CELL
WITH MAX_RoT? ~1105

YES ← ↓ NO

SELECT CELL
WITH MAX_RoT ~1106

SELECT CELL WITH MAX
ACK RATIO AMONG
MULTIPLE CELLS WITH MAX_RoT ~1107

↓

END

FIG.11

EP 1 594 335 A2

FIG.12

FIG.13

EP 1 594 335 A2

EP 1 594 335 A2

1401 — Selection of
Serving scheduling cell ID or
Serving Scheduling Node B ID

1402 — Channel Coding

1403
Pilot
symbol

1404
TPC
command

1405
OTHER

1406 — Mux

1407 — DPCCH

1408
DPDCH

1409
E-DPCCH

1410
E-DPDCH

1411 — Mux

Modulation ~1412

Transmission ~1413

FIG.14

EP 1 594 335 A2

FIG.15

EP 1 594 335 A2

| 1601 | 1602 | 1603 |
|------|------|------|
| MAC-e Header | MAC-e SDU(s) | CRC |

← MAC-e PDU (1604) →

| Code Block(s) |
|---------------|

1605

## FIG.16